# EUROPEAN PATENT APPLICATION

(11) **EP 0 570 098 A2**
(43) Date of publication of application: **18.11.1993**
(21) Application number: 93301913.5
(22) Date of filing: 12.03.1993
(51) Int. Cl.: B60R 21/16

(54) **Automotive air bag cushion**

(30) Priority: 15.05.1992 US 883075
(71) Applicant: MORTON INTERNATIONAL, INC., Chicago Illinois 60606-1596 (US)
(72) Inventor: Marchant, Brent, Ogden, UT 84403 (US); Allard, John E., North Ogden, UT 84414 (US)
(74) Representative: Bankes, Stephen Charles Digby

(57) **Abstract**

Automotive air bag cushion including an air bag with vents covered by filter patches (24). Each filter patch includes a filter layer (28) located between layers of filter reinforcement (26, 34). First and second support elements (30, 32) are provided between the filter layer (28) and each filter reinforcement layer (26, 34). The parts constituting the filter may be made of screen like material of glass, fiberglass, nylon, vinyl coated fiberglass or polyester. The filter contains particulate material suspended in gas used to inflate the bag.

## Description

This invention relates generally to inflatable type modular occupant restraint systems for passenger vehicles or, as they are more commonly known, air bag restraint systems. Such a system may be installed in an automobile or other vehicle, at least in part on the steering wheel or adjacent to the driver for the protection of the driver and also in the dashboard or adjacent to the occupant for passenger protection in the event of a collision. More particularly, this invention relates to an improved means for filtration of the gas discharged through vent holes in an air bag cushion.

Air bag restraint systems for restraining the movement of vehicle occupants during collisions have long been known. The air bag restraint system is located in close proximity to the occupants and normally is in a deflated condition. In the event of a crash, however, the air bag is inflated in approximately 20 to 40 milliseconds by a gas produced by the burning of a gas generant material in an inflator. The gas generant is ignited by an igniter. The gas generant burns rapidly generating a gas that contains combustion residue, including fine molten particles of metal and/or reactant oxides. The pressure of combustion gases resulting from the rapid burning of the gas generant material causes gas to rush into the bag to effect a rapid rate of inflation thereof. The gas generated by the inflator is filtered significantly by a filter unit internal to the inflator, however, not all of the fine particulate matter is removed by the inflator filtration means.

An air bag cushion, which is normally made from a material which is substantially impermeable to the flow of gas, typically is provided in part thereof with at least one vent port which serves as an outlet for gas contained within the air bag cushion. The gas contained within an inflated air bag cushion is expelled from the bag when a load is imparted to the cushion, after it has been inflated, by the weight of the occupant impacting on the air bag cushion due to the occupant's inertia at the time of collision. The filtration of the fine particulate matter entrained in the generated gas after it has left the inflator is made difficult due to the presence of the uncovered vent ports. Further, the uncontrolled venting of gas within the air bag cushion into the passenger compartment through the gas vent ports reduces the effectiveness of the air bag cushion in protecting the vehicle occupants.

A patch which partially blocks the gas outlet port and which patch ruptures at a predetermined level of impact to provide for the dissipation of absorbed kinetic energy is disclosed by Brawn, U.S. Patent No. 3,573,885.

A gas-permeable cloth covering the gas outlet ports of the air bag cushion which controls the quantity to exit gas outflowing from the air bag is disclosed by Okada et al., U.S. Patent No. 4,111,458. To strengthen the air bag in the area of the gas outlet ports, thereby preventing the rupture of the gas-permeable cover cloth, the gas outlet ports of Okada are reinforced by a reinforcing member which is attached to the air bag cushion at each of the gas outlet ports and extends across the gas outlet ports.

Also, commercially available is a driver side air bag, the back portion of which is covered in part by a gas permeable fabric made from a single layer of fabric made from KEVLAR®, a high performance aromatic polyamide fiber. The use of KEVLAR® is required due to the limitation that one gas permeable layer of fabric must be able to withstand the tension placed on it by a deploying air bag, while at the same time being able to withstand the temperatures at which an air bag must be able to perform. The use of such a high performance fabric causes problems due the difficulty in cutting and shaping such an abrasion resistant fabric.

An object of this invention is to provide a primary filter means for use with automotive air bags.

Another object of this invention is to provide a secondary filter means for use with automotive air bags.

Another object of this invention is to provide a filter means for particulate laden gas generated by an inflator which is exhausted through the vent ports located in the cushion of an automotive air bag.

These and other objectives of the invention, which will become apparent from the following description, have been achieved by a novel safety air bag cushion for use in passenger vehicles, which air bag is inflated by a particulate containing gas under pressure provided from a gas generator, the air bag cushion comprising, a deformable body of the air bag cushion made of a cloth having a front portion and an adjacent back portion. The fabric from which the front portion is manufactured is substantially impermeable to gas. The fabric from which the back portion is made can be substantially impermeable to gas or may be gas-permeable. A least one gas vent in the back portion of the air bag cushion through which flows particulate containing gas thus permitting the generated gas to be exhausted from the air bag cushion. A filter patch comprising a first reinforcement layer and a first filter media layer is disposed on the vent, covering the each vent, and operating to filter the gas discharged therethrough from the air bag. Preferably, a plurality of spaced gas vents are provided in the back portion of the air bag cushion to permit more even venting of gas. The filter patch of this invention would then be disposed on each of the gas vents, covering each vent, and operating to filter the gas discharged therethrough from the air bag.

The invention will now be described by way of example only with reference to the following figures, in which like parts are designated by the same reference numbers, and in which:
FIG. 1 is a side plan view illustrating a typical driver side air bag cushion in a deployed condition;
Fig. 2 is a front plan view showing the back portion of the air bag cushion including the filtered vent ports; and
Fig. 3 is a series of views illustrating the orientation of the individual filter elements in relation to one another within the filter unit for the filtered vent ports of this invention.

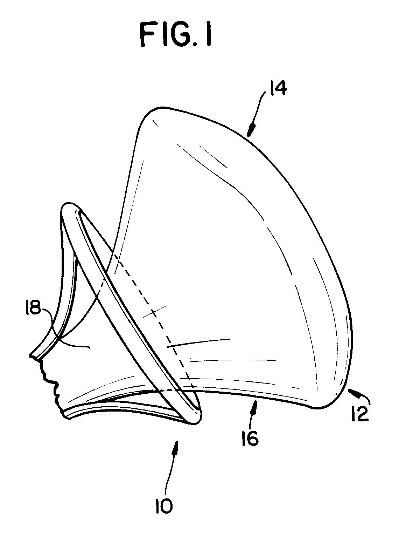

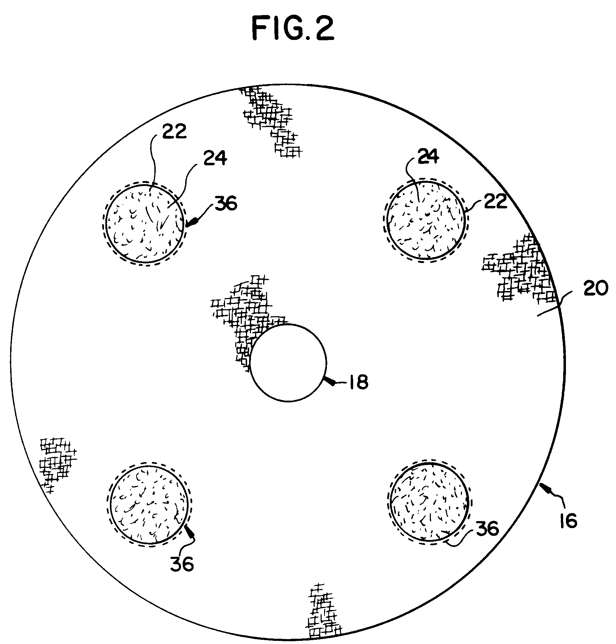

As best seen in Fig. 1, shown generally at **10** is an automotive air bag cushion **12** in a deployed condition. The air bag cushion **12** includes a front panel **14**, a back panel **16**, and a gas inlet opening **18**, as shown in Fig. 2, that is provided for receiving a gas for inflation of the air bag cushion **12** provided by a gas generator (not shown). As shown in Fig. 2, the back panel **16** of the air bag cushion **12** comprises a fabric portion **20** with a gas inlet opening **18** provided generally in the central region of the back panel **16** and at least one vent port **22** located radially outward of the gas inlet opening **18**. The vent ports **22** are covered by a filter patch **24** comprising a plurality of filter patch layers.

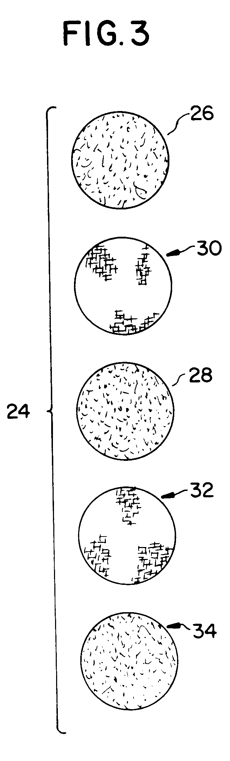

As best seen in Fig. 3, the filter patch **24** comprises at least one layer of first filter reinforcement material **26** and at least one layer of first filter media **28**. The filter patch **24** may further comprise at least one layer of a first support material **30**, at least one layer of a second support material **32**, and at least one layer of a second filter reinforcement **34**. The filter patch **24** can be attached the back panel **16** covering the vent ports **22** by stitches **36**, adhesive, or similar means. The filter patch **24** is arranged with one layer of first filter reinforcement **26** being the most outward layer. Next, is placed one layer of optional first support material **30**, followed by one layer of first filter media **28**, the second support material **32**, and finally the second reinforcement material **34.** The second reinforcement material **34** is the most inward layer of the filter patch **24**, through which the exhausted gas first flows.

The first filter reinforcement material **26** can be any suitable gas permeable sheet of material which is capable of withstanding the temperature, stress and the loading applied by the rapidly inflating automotive air bag cushion **12**. Suitable materials include, but are not limited to, woven or non-woven screen material, which are made from glass, fiberglass, nylon, vinyl coated fiberglass, or polyester. Preferably, woven screen is used as it provides increased tensile strength in at least one direction and can be easily attached to the back panel **14** of the automotive air bag cushion **12** by stitches **36** or the like. More preferably, woven screen made from vinyl-coated fiberglass similar to fiberglass window screen is used, as it provides the necessary tensile strength while maintaining its structural integrity.

The first filter media **28** can be any suitable gas permeable sheet of material which is capable of withstanding the temperature, and the loading applied by the rapidly inflating automotive air bag cushion **12**, while filtering particulate matter from the generated gas which exits the air bag cushion **12** through the vent ports **22**. Suitable materials include, but are not limited to, woven or non-woven filter material, which are made from ceramic fiber, glass, fiberglass, nylon, vinyl coated fiberglass, or polyester. Preferably, fine woven fiberglass screen is used as it provides good filtration while being sufficiently permeable to permit a sufficient amount of generated gas to escape from the air bag cushion **12** to allow for proper performance of the air bag cushion **12** be easily attached to the back panel **14** of the automotive air bag cushion **12** by stitches **36** or the like. More preferably fiberglass mesh should be used, as the material achieves good filtering of the vented generated gas while being structurally stable and easy to cut and size for the assembly process. The material used for the first filter media **28** should have a permeability of from about 0.3 liter/min cm² to about 4.0 liters/min·cm². More preferably the permeability should be from about 0.5 liter/min·cm² to about 2.0 liter/min·cm².

The first support material **30** can be any suitable gas permeable sheet of material which is capable of withstanding the stress, temperature, and the loading applied by the rapidly inflating automotive air bag cushion **12**, while providing support for the first filter media **28**. Suitable materials include, but are not limited to, woven or non-woven filter material, which are made from ceramic fiber, glass, fiberglass, nylon, vinyl coated fiberglass, or polyester. Preferably, woven fiberglass screen is used as it provides good tensile strength in at least one direction and can be easily attached to the back panel **14** of the automotive air bag cushion **12** by stitches **36** or the like. More preferably, woven screen made from vinyl-coated fiberglass is used, as it provides the necessary tensile strength while maintaining its structural integrity.

The second structural support material **32** may be the same as the first support material **30**. The second reinforcement layer **34** may be the same as the first reinforcement layer **26**. The different layer are so oriented such that the strands which make up the different elements of the filter patch do not parallel one another. Preferably the strands which make up the different elements of the filter patch **24** are oriented in such a way that the strands of adjacent filter patch **24** elements are positioned in an angle of from about 30° to about 60° of one another. More preferably the strands which make up the different elements of the filter patch **24** are oriented in such a way that the strands of adjacent filter patch **24** elements are positioned at an angle of about 45° of one another.

The elements of the filter patch **24** are cut and assembled to form one unit. The complete filter patch **24** may then attached to the inside or the outside of the automotive air bag cushion **12** by stitches **36**, by adhesive means, or the like. The filter patch **24** of this invention can be used with any conventional driver side or passenger side air bag and which have vent ports incorporated therein. The filter patch **24** may function as a primary filter means to remove particulate matter from the generated gas when no filter means is installed within the gas generator. Alternatively, the filter patch **24** of this invention may function as a secondary filter means to remove particulate matter from the generated gas which passes through the filter elements of the gas generator.

The automotive air bag may be stored in the steering wheel or adjacent to the driver for the protection of the driver, and also in the dashboard or passenger side instrument panel for passenger protection in the event of a collision. A signal from a crash sensor triggers the generation of gas by the inflator. Particulate containing gas flows into the air bag from the inflator through the air bag gas inlet. The expanding air bag ruptures tear away seams of a cosmetic cover permitting the air bag to expand into the passenger compartment and generally toward the occupants. As the pressure builds within the expanding air bag a portion of the particulate containing gas is exhausted through the vent holes of the air bag. The filter patches of this invention remove a substantial portion of the particulate matter. As the inertia carries the occupant forward to impact the air bag, the pressure within the air bag increases drastically. The increased pressure exhausts additional particulate containing gas through the vents covered with the filter patch of this invention. The generated gas is thus further filtered before entering the passenger compartment of the vehicle.

Thus, in accordance with the invention, there has been provided a primary filter means for use with automotive air bags. There has also been provided a secondary filter means for use with automotive air bags. There has also been provided a filter means for particulate containing gas generated by an inflator which is exhausted through the vent ports located in the air bag cushion. Further, there has been provided a means for the controlled venting of gas from the air bag cushion, which gas is generated by an air bag gas generator.

With this description of the invention in detail, those skilled in the art will appreciate that modification may be made to the invention without departing from the spirit thereof. Therefore, it is not intended that the scope of the invention be limited to the specific embodiments that have been illustrated and described. Rather, it is intended that the scope to the invention be determined by the scope of the appended claims.

## Claims

1. A safety air bag cushion (12) for use in passenger vehicles, which air bag is inflated by a particulate containing gas under pressure provided from a gas generator, said air bag cushion comprising:
a foldable body of said air bag cushion (12) having a front portion (14) made of a cloth substantially impermeable to gas and an adjacent back portion (16).
at least one gas vent (22) formed in said back portion, through which flows gas which is exhausted from the air bag cushion characterised by
a filter patch (24) disposed in covering relation with respect to said gas vent (22) and operative to filter the gas discharged therethrough from said air bag, wherein said filter patch comprises at least a first layer of reinforcement material (26) and at least one layer of filter media (28).

2. The safety air bag cushion of claim 1 characterised in that the filter patch (24) further comprises a first support material element (30).

3. The safety air bag cushion of claim 2 characterised in that the filter patch (24) further comprises a second support material element (32).

4. The safety air bag cushion of any preceding claim characterised in that the filter patch further comprises a second layer of reinforcement material (34).

5. The safety air bag cushion of claim 4 characterised in that the first and second layers of reinforcement material (26, 34) are located on opposite sides of the layer of filter media (28).

6. The safety air bag cushion of any of claims 2 to 5 characterised in that the first or second support material elements (30, 32) are located between the filter media (28) and the respective one of said layers of reinforcement material (26, 34).

7. The safety air bag cushion of any preceding claim characterised in that any one of the layers of reinforcement material (26, 34) or support material (30, 32) is constituted by a screen.

8. The safety air bag cushion of claim 7 characterised in that the screen is made from glass, fiberglass, nylon, vinyl coated fiberglass or polyester.

9. The safety air bag cushion of any preceding claim characterised in that the filter media (28) is made from glass, fiberglass, nylon, vinyl coated fiberglass or polyester.

10. The safety air bag cushion of any preceding claim wherein the filter media (28) has a permeability of from 0.3 to 4.0 litres per minute.cm² measured at 500 pascals.

11. The safety air bag cushion as claimed in any preceding claim characterised in that strands which make up different elements of the filter patch are orientated in such a way that the strands of adjacent elements are positioned at an angle of 30° to 60° to one another.
